**Europäisches Patentamt**

(19) **European Patent Office**

**Office européen des brevets**

(11) Publication number : **0 246 773 B1**

(12) # EUROPEAN PATENT SPECIFICATION

(45) Date of publication of patent specification :
04.03.92 Bulletin 92/10

(21) Application number : **87303865.7**

(22) Date of filing : **30.04.87**

(51) Int. Cl.⁵ : **G01V 1/40**

(54) An acoustic transducer for a borehole logging tool.

(30) Priority : **23.05.86 US 866560**

(43) Date of publication of application :
**25.11.87 Bulletin 87/48**

(45) Publication of the grant of the patent :
**04.03.92 Bulletin 92/10**

(84) Designated Contracting States :
**DE FR GB NL**

(56) References cited :
**EP-A- 0 136 027**
**US-A- 3 360 664**
**US-A- 4 140 936**

(73) Proprietor : **MOBIL OIL CORPORATION**
**150 East 42nd Street**
**New York New York 10017 (US)**

(72) Inventor : **Sims, Claude Campbell**
**1308 Heron Drive**
**Orlando Florida 32803 (US)**

(74) Representative : **Cooper, John Anthony et al**
**Mobil Court 3 Clements Inn**
**London WC2A 2EB (GB)**

## Description

The invention relates to an acoustic transducer for a borehole logging tool.

Open boreholes are logged with acoustic pulses to determine the velocities of compressional and shear waves traveling through the earth formations surrounding the borehole. By timing the travel of acoustic waves between the transmitters and receivers of a logging tool, the nature of these surrounding formations can be determined. U.S. Patent No. 4,516,228 describes a logging tool for detecting both compressional and shear waves.

Monopole transducers typically generate a compressional wave by generating a pressure pulse on one side of the transducer which radiates outwardly from the transducer. Bender transducers typically are monopole transducers which generate compressional waves. U.S. Patents Nos. 3,363,118 and 3,380,019 disclose bender transducers for use in open water. These transducers include a disk and a piezoelectric material which flexes the disk in a bender action. The disk is fixed around its edge, such as by a support ring in U.S. Patent No. 3,363,118, so that when a voltage is applied to the piezoelectric material, the center portion of the disk flexes. Alternatively, these transducers are used as receivers which convert acoustic energy to an electrical signal.

U.S. Patent 4,383,308 discloses the use of a bender transducer in a borehole logging tool. The operating environments of a borehole and open water are quite different, as are the respective transmission media and associated instrumentation. A transducer used in a logging tool must be capable of operating under high temperatures, typically 149-177°C (300°-350°F).

Another known type of acoustic transducer is referred to as a "bender bar" transducer, such as that produced by Honeywell, Inc, and comprises a stack of flat piezoelectric elements which are supported at one end. When a voltage is applied, the other end of the stack moves to produce a monopole pulse of energy. One way to use bender bar transducers in a logging tool would be to provide a circular array of such devices, with each bender bar stack producing energy which radiates outwardly from the tool. However, the constraints of a logging tool do not provide enough room for such an array of sources. The industry standard logging tool is 9.2 cm (3-5/8″) in diameter which severely constrains the size of the transducer.

In US-A-4140936 there is disclosed an electroacoustic transducer comprising a plurality of thin, narrow, piezoelectric bars bonded side by side to a flexible plate. Piezoelectric length expansions and contractions of the bars are translated into an oscillating bending motion of the bars and the plate.

It is an object of the present invention to provide a bender transducer which will fit into an industry standard logging tool, and which will withstand the severe conditions of borehole logging.

It is another object of the present invention to provide a bender transducer which will radiate a dipole wave with positive pressure pulses on one side of the transducer, and negative pressure pulses on the other side of the transducer.

In accordance with the present invention there is provided an acoustic transducer for a borehole logging tool as defined in claim 1.

When a voltage is applied to the electrodes of the piezoelectric element, the inert element flexes about the hinges to produce a dipole shear wave in the fluid surrounding the logging tool. Alternatively, of course, the transducer of the present invention can be used as a receiver to convert acoustic energy into an electric signal.

Further features of the invention are defined in the dependent claims.

The transducer of the invention has the advantages of compact size, good frequency characteristics, good temperature stability and ruggedness, all of which makes it particularly suitable for use in a borehole logging tool, the latter set out in claim 8.

Reference is now made to the accompanying drawings, in which:

Fig. 1 shows a well logging system with a logging tool in a borehole;

Fig. 1A shows the transducer of the logging tool;

Fig. 2 is a perspective view of the transducer;

Fig. 3 is a bottom plan view of a transducer with two piezoelectric elements;

Fig. 3A is a section on the line 3A-3A of Fig. 3;

Fig. 4 is an end view of the supporting frame;

Fig. 5 is an end view of the transducer; and

Fig. 6 depicts the electrical connections to the transducer.

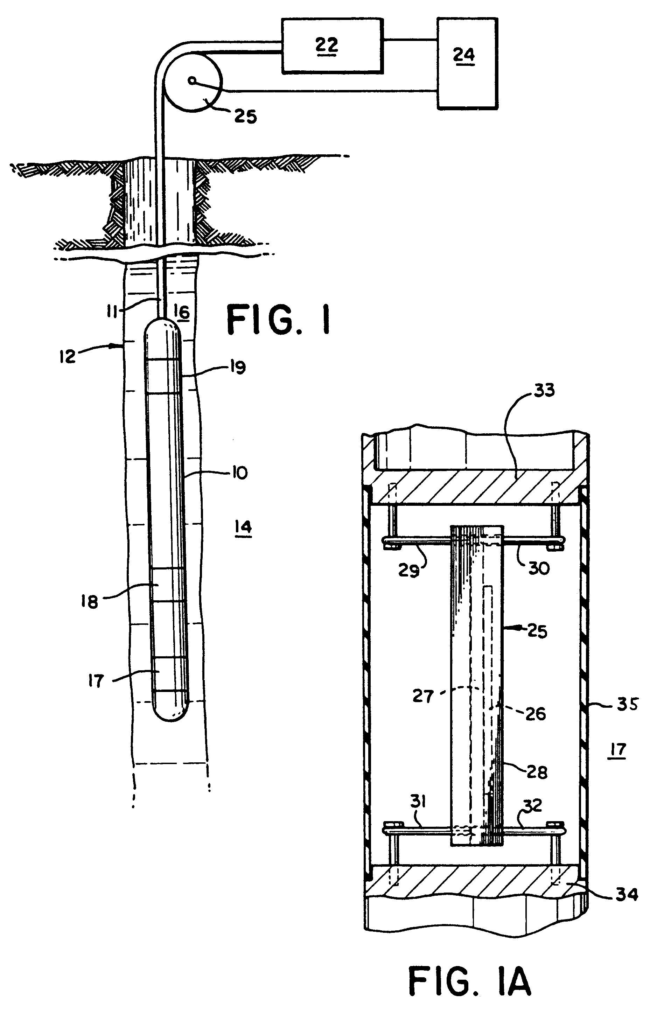

Referring to Figure 1, the acoustic well logging system includes an elongated logging tool 10 which is suspended from a cable 11 within a borehole 12 which transverses a subterranean formation of interest 14. Formation 14 may be a suspected oil or gas bearing formation which is to be characterized with regard to its porosity, fluid saturation, or such other information as may be desired. The well 12 is filled with a liquid such as drilling mud 16. The logging tool 10 comprises acoustic transmitters 17 and 18 and the acoustic receiver 19.

Signals from the logging tool 10 are transmitted uphole by the conductors in cable 11 to a utilization system comprising control circuit 22 and recorder 24. A depth indicating means, such as a measuring sheave, produces a depth signal which is applied to the recorder 24 in order that the output from control circuit 22 may be correlated with depth.

As shown in Figure 1A, the transmitter 17 includes a bender transducer 25 which comprises a flat elongated piezoelectric element 26 affixed to a flat elongated inert element 27, which is typically an aluminum plate. The plate is mounted at both ends to a supporting mass or frame 28. Vicom rubber straps 29-32 suspend the transducer in the transducer compartment formed by panels 33 and 34 and neoprene rubber protective casing 35. The transducer compartment is filled with a suitable coupling liquid which has an acoustic impedance close to that of the liquid within the borehole.

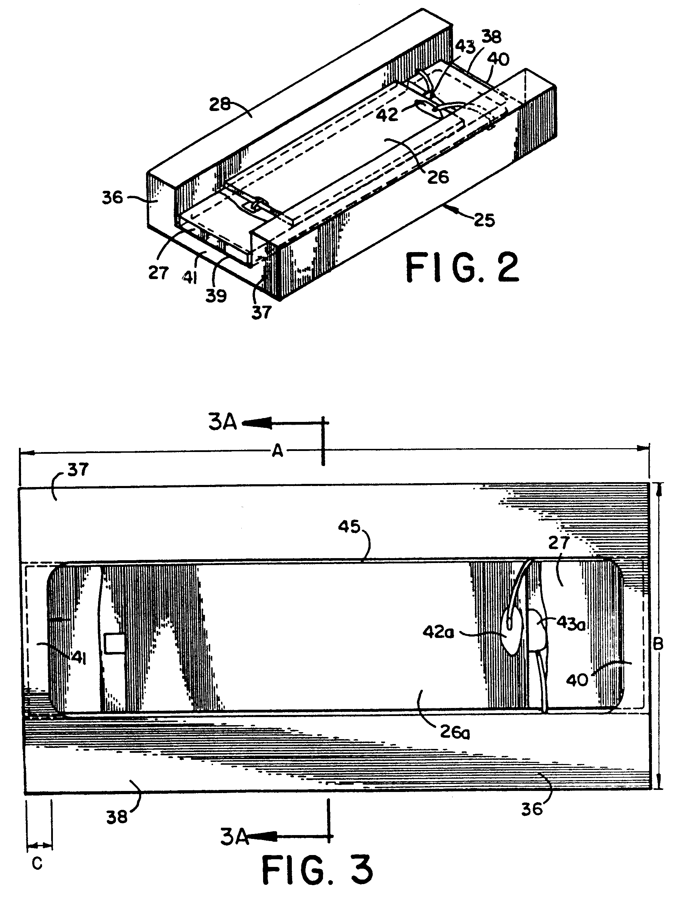

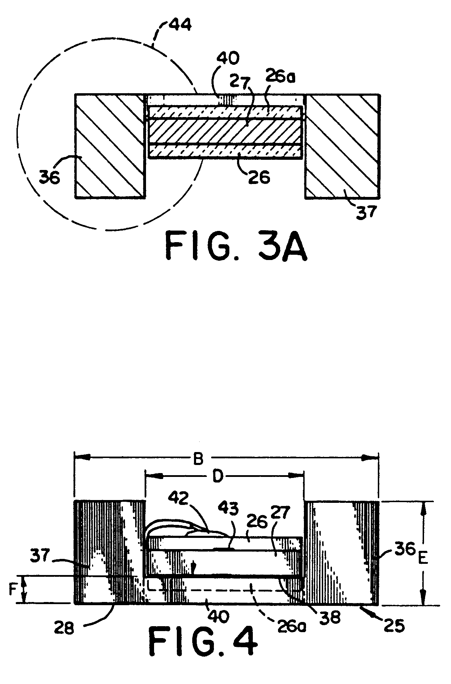

As shown in Figures 2 and 3, the element 26 is mounted on the element 27 which in turn is affixed at each end to the frame 28. The frame 28 has baffles 36 and 37 which acoustically separate the exposed surfaces of the transducer. Fiberglass layers 38 and 39 bond the inert element 27 to the ends 40 and 41 of frame 28. These ends act as hinges when a voltage applied to electrodes 42 and 43 causes the inert element to flex.

Frame 28 is rectangular, with a rectangular opening, with the ends 40 and 41 being disposed at opposite sides respectively of the rectangular opening. These ends twist in a hinge-like movement as the inert element 27 flexes in response to applied voltage. This produces a bi-polar acoustic wave when the exposed top surface of element 26 produces a positive pressure pulse and the bottom exposed surface of element 27 (Fig. 2) produces a negative pressure pulse, or vice versa.

Figs. 3-5 show an embodiment in which another piezoelectric element 26a is mounted on the underside of inert element 27 between the element 27 and the frame 28. Like reference numerals, or reference numerals with "a" affixed thereto, indicate like components to the embodiment described with reference to Fig. 2. In this embodiment, one surface of each piezoelectric element is exposed and the other surface is affixed to the inert element. The two exposed surfaces of the piezoelectric elements respectively generate positive and negative pressure pulses to produce a bi-polar acoustic wave.

Fig. 3A depicts an important function of the baffles 36 and 37. These baffles acoustically separate the two exposed surfaces of the elements. The acoustic energy generated must take the path indicated by the dashed lines 44. Without this acoustic baffling, the acoustic energy would take the shortest path between the two exposed surfaces and would not generate the desired acoustic wave.

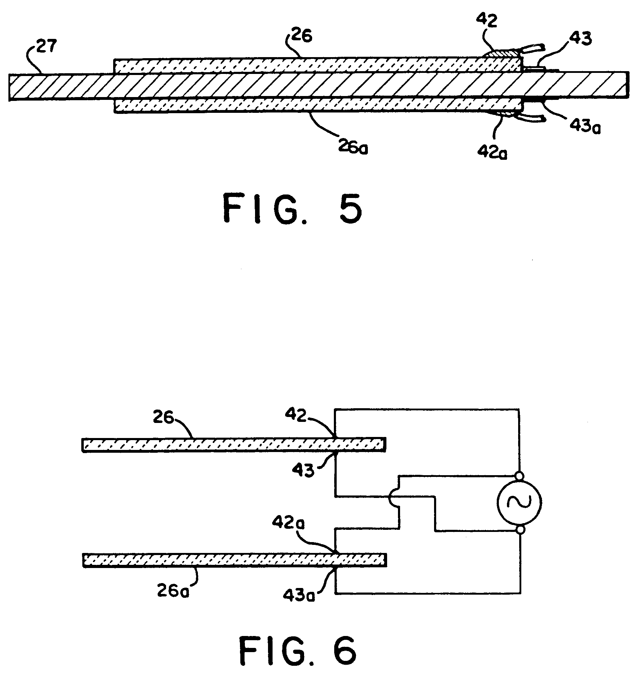

Fig. 6 depicts the electrical connections to the two piezoelectric elements 26 and 26a. An alternating voltage is applied to the two opposed surfaces of the piezoelectric elements. The voltage on one side is positive-going while the other is negative-going, and vice versa. This results in the element 26 being compressed and the element 26a being expanded during one half cycle, and vice versa during the other half cycle. This reinforces the flexing of the inert element 27. By applying an alternating voltage at the proper frequency, an acoustic wave at the desired frequency is produced.

Certain dimensions of the transducer are critical to the generation of the acoustic wave at the desired frequency. For example, the width of the ends 40 and 41 of the frame, are measured from the outside of the frame to the edge of the rectangular opening, must be correctly chosen to provide the desired hinge-like movement. In addition, the width of the space 45 (Fig. 3) between the edge of the frame and the edge of the inert element should be sufficiently small so that liquid does not easily pass through the opening without producing the desired wave. At the same time, the opening should be large enough so that unwanted viscous damping does not occur.

In one practical embodiment the piezoelectric elements 26 and 26a were 10 cm (4 inch) PZT-4 material supplied by EDO Western Corporation, Salt Lake, Utah while each of the elements 26 and 26a were 3.2 cm (1.25 inch) thick, cut to 3.8 cm (1.5 inch) widths, and were bonded to inert element 27 with one layer of fiberglass. Inert element 27 was a 15.6 x 3.8 x 0.6 cm (6.125 x 1.5 x 0.25 inch) piece of aluminium stock 6061-T6. Leads of #26 wire were attached to the electrode and the elements were potted in DC 170 A & B. The capacitance was .0145 microfarads. The frame 28 was cold rolled steel with the following dimensions shown in to Figs. 3 and 4.

A 15.9 cm (6.25 inch)
B 7.6 cm (3.0 inch)
C 0.6 cm (0.25 inch)
D 4.3 cm (1.7 inch)
E 2.5 cm (1.0 inch)
F 1.0 cm (0.375 inch)

A DC voltage of up to about 1,000 volts RMS was applied to the transducer at about 1 KHz. The desired 1 KHz acoustic wave was produced.

## Claims

1. An acoustic transducer (25) for a borehole logging tool (10) comprising :

(a) a flat, elongated, piezoelectric element (26) having an exposed side and a second side, the piezoelectric element having an electrode (42,43) on each of said sides;

(b) a flat, elongated, inert element (27) having an exposed side and a second side, said second side of the piezoelectric element being affixed to the second side of the inert element;

(c) a supporting mass (28) suspended in said borehole logging tool (10), the inert element (27) being hinged to the supporting mass (28).

(d) means for applying a voltage to said electrodes (42,43) to flex the inert element (27) characterized by :

(e) a compartment filled (33,34,35) with coupling fluid within which the piezoelectric element (26), the inert element (27) and the supporting mass (28) are disposed whereby when the inert element (27) is flexed a bi-polar acoustic wave is generated into the coupling fluid by said exposed side of the piezoelectric element (26) and said exposed side of the inert element (27); and

(f) baffles (36,37) on said supporting mass (28) for separating the acoustic energy generated into said coupling liquid by said exposed side of said piezoelectric element (26) and said exposed side of said inert element (27).

2. A transducer (25) according to claim 1 characterized in that there are two baffles (36,37) each being disposed substantially parallel to the longitudinal axis of the piezoelectric element (26) and inert element (27).

3. A transducer (25) according to claim 1 or 2 characterised in that the supporting mass (28) comprises a generally rectangular frame, the inert element (27) being affixed to the frame at both ends of said element (27), and the piezoelectric element (26) and the inert element (27) are exposed by the frame.

4. A transducer (25) according to claim 3, characterized in that the frame extends around a rectangular opening, opposed ends of the inert element (27) being affixed to the ends respectively of the frame on opposite sides of said rectangular opening, the ends of the frame twisting as the inert element (27) flexes.

5. A transducer (25) according to claim 1, 2, 3 or 4 characterised in that a space (45) is provided between an edge of the supporting mass (28) and an edge of the inert element (27).

6. A transducer (25) according to any preceding claim characterized in that the piezoelectric element (26) is affixed to the second side of the inert element (27), and a further piezoelectric element (26a) is affixed on one side to said opposite side of the inert element (27) so that said opposite side is no longer exposed, and the other side of the further piezoelectric element (26a) being exposed.

7. A transducer (25) according to claim 6, characterized in that one of the piezoelectric elements (26,26a) compresses when a voltage is applied, and the other expands to impart a flexing movement to the inert element (27).

8. A borehole logging tool (10) for investigating subterranean formations (14) by traversing a borehole (12) filled with a liquid (16) while generating acoustic waves for reflection by said subterranean formation (14), comprising :

(a) at least one acoustic transmitter (17,18) for generating acoustic waves into said subterranean formation (14).

(b) an acoustic receiver (19) for receiving acoustic waves reflected by said subterranean formation (14);

and wherein the or each acoustic transmitter comprises a transducer as defined in any preceding claim.

## Patentansprüche

1. Akustischer Wandler (25) für ein Bohrlochmeßgerät (10), welcher umfaßt:

(a) ein ebenes langes piezoelektrisches Element (26) mit einer freigelegten Seite und einer zweiten Seite, wobei dieses piezoelektrische Element auf jeder dieser Seiten eine Elektrode (42, 43) aufweist;

(b) ein ebenes langes inertes Element (27) mit einer freigelegten Seite und einer zweiten Seite, wobei die zweite Seite des piezoelektrischen Elements an die zweite Seite des inerten Elementes angebracht ist;

(c) eine Stützmasse (28), die im Bohrlochmeßgerät (10) aufgehängt ist, wobei dieses inerte Element (27) an der Stützmasse (28) hängt;

(d) eine Einrichtung zur Anwendung einer Spannung auf die Elektroden (42, 43), um das inerte Element (27) zu biegen, gekennzeichnet durch:

(e) eine Kammer, die mit einem Kopplungsfluid gefüllt ist (33, 34, 35) innerhalb der das piezoelektrische Element (26), das inerte Element (27) und die Stützmasse (28) angeordnet sind, wodurch, wenn das inerte Element (27) gebogen wird, durch die freigelegte Seite des piezoelektrischen Elements (26) und die freigelegte Seite des inerten Elementes (27) eine bipolare Schallwelle im Kopplungsfluid erzeugt wird; und

(f) Prallflächen (36, 37) auf der Stützmasse (28) zur Trennung der Schallenergie, die durch die freigelegte Seite des piezoelektrischen Elements (26) und die freigelegte Seite des inerten Elements (27) in der Kopplungsflüssigkeit erzeugt wird.

2. Wandler (25) nach Anspruch 1, dadurch gekennzeichnet, daß es zwei Prallflächen (36, 37) gibt, die jeweils im wesentlichen parallel zur Längsachse des piezoelektrischen Elements (26) und des inerten Elements (27) angeordnet sind.

3. Wandler (25) nach Anspruch 1 oder 2, dadurch gekennzeichnet, daß die Stützmasse (28) einen im allgemeinen rechtwinkligen Rahmen umfaßt, das inerte Element (27) an beiden Enden des Elementes (27) an den Rahmen angebracht ist und das piezoelektrische Element (26) und das inerte Element (27) durch den Rahmen freigelegt werden.

4. Wandler (25) nach Anspruch 3, dadurch gekennzeichnet, daß sich der Rahmen um eine rechtwinklige Öffnung erstreckt, wobei die entgegengesetzten Enden des inerten Elements (27) an die entsprechenden Enden des Rahmens auf entgegengesetzten Seiten der rechtwinkligen Öffnung angebracht sind, wodurch sich die Enden des Rahmens verdrehen, wenn sich das inerte Element (27) biegt.

5. Wandler (25) nach Anspruch 1, 2, 3 oder 4, dadurch gekennzeichnet, daß zwischen der Kante der Stützmasse (28) und der Kante des inerten Elements (27) ein Raum (45) vorgesehen ist.

6. Wandler (25) nach einem der vorstehenden Ansprüche, dadurch gekennzeichnet, daß das piezoelektrische Element (26) an die zweite Seite des inerten Elements (27) angebracht ist und ein weiteres piezoelektrisches Element (26a) an einer Seite an die entgegengesetzte Seite des inerten Elements (27) angebracht ist, so daß die entgegengesetzte Seite nicht länger freiliegt und die andere Seite des weiteren piezoelektrischen Elements (26a) freigelegt ist.

7. Wandler (25) nach Anspruch 6, dadurch gekennzeichnet, daß eines der piezoelektrischen Elemente (26, 26a) zusammengedrückt wird, wenn eine Spannung angewendet wird, und sich das andere ausdehnt, um auf das inerte Element (27) eine biegende Bewegung zu übertragen.

8. Bohrlochmeßgerät (10) zur Untersuchung unterirdischer Formationen (14) durch Durchquerung eines Bohrlochs (12), das mit einer Flüssigkeit (16) gefüllt ist, wobei Schallwellen erzeugt werden, die durch die unterirdische Formation (14) reflektiert werden, welches umfaßt:

(a) mindestens einen akustischen Sender (17, 18) zur Erzeugung von Schallwellen in die unterirdische Formation (14),

(b) einen akustischen Empfänger (19) zum Empfang der Schallwellen, die von der unterirdischen Formation (14) reflektiert wurden,

wobei der oder jeder akustische Sender einen Wandler nach einem der vorstehenden Ansprüche umfaßt.

## Revendications

1. Un transducteur acoustique (25) destiné à un outil de diagraphie (10) pour trou de forage, comprenant:

a) un élément piézoélectrique allongé plat (26), ayant un côté exposé et un deuxième côté, l'élément piézoélectrique ayant une électrode (42), (43) sur chacun desdits côtés;

b) un élément inerte allongé plat (27) ayant un côté exposé et un deuxième côté, ledit deuxième côté de l'élément piézoélectrique étant fixé au deuxième côté de l'élément inerte;

c) une masse de support (28) suspendue dans ledit outil de diagraphie (10) pour trou de forage, l'élément inerte (27) étant fixé par articulation à la masse de support (28);

d) un moyen destiné à appliquer une tension auxdites électrodes (42), (43) pour provoquer le fléchissement de l'élément inerte (27), caractérisé par:

e) un compartiment (33), (34), (35), rempli d'un fluide de couplage, dans lequel l'élément piézoélectrique (26), l'élément inerte (27) et la masse de support (28) sont disposés, de telle façon que, quand l'élément inerte 27 subit un fléchissement, une onde acoustique bipolaire soit produite dans le fluide de couplage par ledit côté exposé de l'élément piézoélectrique (26) et ledit côté exposé de l'élément inerte (27); et

f) des déflecteurs (36), (37) sur ladite masse de support (28) destinées à séparer l'énergie acoustique produite dans ledit liquide de couplage par ledit côté exposé dudit élément piézoélectrique (26) et ledit côté exposé dudit élément inerte (27).

2. Un transducteur (25) selon la revendication 1, caractérisé en ce qu'il comprend deux déflecteurs (36), (37), dont chacune est disposées pratiquement parallèlement à l'axe longitudinal de l'élément piézoélectrique (26) et de l'élément inerte (27).

3. Un transducteur (25) selon la revendication 1 ou 2, caractérisé en ce que la masse de support (28) comprend un cadre généralement rectangulaire, l'élément inerte étant fixé au cadre en les deux extrémités dudit élément (27), et l'élément piézoélectrique (26) et l'élément inerte (27) sont laissés découverts par le cadre.

4. Un transducteur (25) selon la revendication 3, caractérisé en ce que le cadre s'étend autour d'une ouverture rectangulaire, les extrémités opposées de l'élément inerte (27) étant fixées aux extrémités respectives du cadre sur les côtés opposés de ladite ouverture rectangulaire, les extrémités du cadre subissant une torsion lors du fléchissement de l'élément inerte (27).

5. Un transducteur (25) selon la revendication 1, 2, 3 ou 4, caractérisé en ce qu'un espace (45) est prévu entre un bord de la masse de support (28) et un bord de l'élément inerte (27).

6. Un transducteur (25) selon l'une quelconque des revendications précédentes, caractérisé en ce que l'élément piézoélectrique (26) est fixé au deuxième côté de l'élément inerte (27), et en ce qu'un autre élément piézoélectrique (26a) est fixé par un côté audit côté opposé de l'élément inerte (27), de façon que ledit côté opposé ne soit plus exposé, l'autre côté de l'autre élément piézoélectrique (26a) étant exposé.

7. Un transducteur (25) selon la revendication 6, caractérisé en ce que l'un des éléments piézoélectriques (26, 26a) subit une compression quand on applique une tension, l'autre se dilatant pour conférer à l'élément inerte (27) un mouvement de flexion.

8. Un outil de diagraphie (10) pour trou de forage, destiné à étudier les formations souterraines (14) en traversant un trou de forage (12) rempli d'un liquide (16), tout en produisant des ondes acoustiques destinées à être réfléchies par ladite formation souterraine (14), comprenant:

a) au moins un émetteur acoustique (17, 18) destiné à produire des ondes acoustiques dans ladite formation souterraine (14);

b) un récepteur acoustique (19) destiné à recevoir les ondes acoustiques réfléchies par ladite formation souterraine (14);

et dans lequel le ou chaque émetteur acoustique comprend un transducteur tel que défini dans l'une quelconque des revendications précédentes.

FIG. I

FIG. IA

FIG. 2

FIG. 3

FIG. 3A

FIG. 4

FIG. 5

FIG. 6